# EUROPEAN PATENT SPECIFICATION

(11) **EP 1 577 279 B1**
(45) Date of publication and mention of the grant of the patent: **05.08.2009**
(21) Application number: 03780951.4
(22) Date of filing: 19.12.2003
(51) Int. Cl.: C04B 35/64

(54) **METHOD FOR PRODUCING CERAMIC STRUCTURE**
VERFAHREN ZUR HERSTELLUNG EINER KERAMIKSTRUKTUR
PROCEDE DE PRODUCTION D'UNE STRUCTURE EN CERAMIQUE

(30) Priority: 26.12.2002 JP 2002376960
(43) Date of publication of application: 21.09.2005
(73) Proprietor: NGK INSULATORS, LTD., Nagoya-City, Aichi Pref. 467-8530 (JP)
(72) Inventor: ITO, Isao, NGK INSULATORS, LTD., Nagoya-shi, Aichi 467-8530 (JP); YAMAMOTO, Yoshinori, NGK INSULATORS, LTD., Nagoya-shi, Aichi 467-8530 (JP); MUROI, Yumi, NGK INSULATORS, LTD., Nagoya-shi, Aichi 467-8530 (JP)
(74) Representative: Paget, Hugh Charles Edward
(86) International application number: PCT/JP2003/016378
(87) International publication number: WO 2004/058663

(56) References cited:
- JP-A- 10 310 474
- JP-A- 59 232 969
- JP-A- 2001 220 240
- JP-A- 2002 201 082

## Description

### BACKGROUND OF THE INVENTION

### Field of the Invention

The present invention relates to a manufacturing method of a ceramic structure, which is a constituent of a honeycomb structure used in a filter for car exhaust gas purification and a catalyst carrier, for example.

### Description of the Related Art

As ceramic structure of this type, a honeycomb structure made of ceramic material having a structure that silicon carbide particles, which is refractory material, are bonded together through silicon metal (hereinafter referred to as "Si-bonded SiC structure) has been identified (Japanese Patent No. 2002 - 201082).

These Si-bonded SiC structure is manufactured by forming a green body, which results from mixing and kneading materials obtained as a consequence of adding the silicon metal and a binder to the silicon carbide powder material, into a predetermined shape to obtain a formed body, by prefiring the obtained formed body to remove the binder in the formed body, and then by firing the obtained formed body. For example, a green body is formed into a honeycomb shape when an end product is a honeycomb structure.

To be more precise, in this manufacturing method, silicon carbide powder is used as a raw material, silicon metal and an organic binder are added thereto, and then the resultant materials are kneaded with a kneading machine and are formed into a plastic green body, the organic binder which is made of methylcellulose, hydroxypropylmethylcellulose, a surfactant, and water. Thereafter, the plastic green body is further kneaded with an auger machine and formed into a green body, and is further formed into a honeycomb shape with an extruder. Next, this honeycomb formed body is exposed to microwaves and to hot air for drying, and is cut into predetermined dimensions.

Hereafter, any one of open portions of a through hole of the dried body of the honeycomb is sealed with the slurried silicon carbide material (sealing process). Such sealing is performed at both ends of the dried body and they locate alternately. That is, the open portions of through hole and the sealing portions are adjusted to locate them alternately.

Moreover, the dried body after sealing is disposed in a firing furnace, and prefiring and firing are performed. Upon prefiring, the organic binder in the formed body is removed. Upon firing, it is possible to manufacture a porous ceramic structure having the Si-bonded SiC structure in which silicon carbide particles are bonded together through the silicon metal on a part of particle surfaces thereof.

Multiple pieces of the obtained ceramic structures are joined and are formed into a product by grinding into a predetermined shape.

In the above manufacturing method, prefiring and subsequent firing may be performed either in the same furnace or in different furnaces as separate processes, or may be performed in the same furnace as continuous processes.

The silicon metal needs to be softened in order to obtain a formation, in which refractory particles (silicon carbide powder) bonded to the silicon metal. As the melting point of the silicon metal is 1410°C, it is set a firing temperature upon firing at 1400°C or above. Further, an optimal firing temperature is determined according to a microstructure and characteristic values. However, at a temperature exceeding 1800°C, evaporation of the silicon metal progresses and bonding through the silicon metal thereby becomes difficult. Accordingly, the firing temperature is set in a range from 1400 °C to 1800°C.

An atmosphere for firing is selected depending on the type of the refractory particle. When there is a concern of oxidation or nitridation, such as in the case of carbide particles including silicon carbide, an inert atmosphere is used other than N₂, such as Ar at least in a temperature range including the temperature, at which oxidation or nitridation begins, and above.

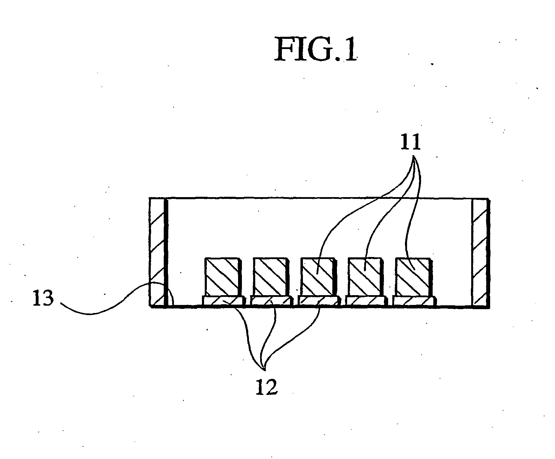

When firing is performed, as shown in Fig. 1, ceramic formed body plates (alias "setter") 12 made of the same ceramic material as dried bodies 11 are placed on a furnace member 13, and the formed bodies 11 after prefiring are placed on these ceramic formed body plates 12. Incidentally, a honeycomb structure is not shown in the figure.

However, the conventional manufacturing method for manufacturing a ceramic structure having the Si-bonded SiC structure has the following problem, especially in firing process.

Specifically, in the manufacturing method described above, after firing, there is a risk of strong adhesion of a fired product to the ceramic formed body plates, on which the fired product is placed, due to the bonded component of silicon metal. If adhered fired product strongly adheres to the ceramic formed body plate, a trouble of breakage of the fired product occurs upon peeling off both sides.

Moreover, not only discoloration caused by deposition of silicon metal on a surface of the fired product due to evaporation of the silicon metal from the formed body during firing, but also there is a risk of degradation of thermal conductivity and strength of the fired product, thereby incurring degradation of quality and appearance of a ceramic structure as an end product.

On the other hand, as for manufacturing methods of ceramic sintered body material besides the Si-bonded SiC structure, a method placing a ceramic formed body on a ceramic powder has been disclosed in Japanese Patent Applications. JP 7278608 and JP 10251073. However, these manufacturingmethods intend to prevent deformation of a sintered body, which does not suggest anything in terms of the problems occurring in the firing process when making ceramic material of the Si-bonded SiC structure.

### BRIEF SUMMARY OF THE INVENTION

An object of present invention is to provide a manufacturing method of a ceramic structure having the Si-bonded SiC structure, which is capable of suppressing breakage of a fired product after firing and suppressing degradation of sintered body characteristics due to evaporation of the silicon metal from the sintered body during firing.

The manufacturing method of a ceramic structure according to the present invention is set out in claim1.

By the manufacturing method of the present invention, an adhesive force of the obtained fired body and the refractory firing powder can be suppressed. Even the refractory firing powder adheres to the fired body, adhesion area of the powder is small thereby the adhesive force is poor. Therefore, it is possible to brush them off easily without incurring breakage of the fired body. It means that a yield can be improved.

Further, although the silicon metal is evaporated inside a furnace from both the formed body and the refractory firing powder due to a high temperature during firing, an amount of evaporation from the refractory firing powder which have larger surface areas is greater than an amount of evaporation from the formed body. Therefore, it is possible to suppress evaporation of the silicon metal from the formed body. It means that decrease of thermal conductivity as well as strength of the fired product and discoloration due to evaporation of the silicon metal from the formed body can be prevented.

In the manufacturing method of the present invention, the refractory firing powder may be formed of a ground material of another fired body obtained by use of a starting material which is substantially identical to a first fired body obtained by the firing.

In this case, the refractory firing powder may be formed by grinding the original fired body obtained by the manufacturing method of the ceramic structure, or by grinding a fired body obtained by a manufacturing method different from the manufacturing method of the ceramic structure.

It is preferred that diameter of the refractory firing powder may be in a range between 0.05 and 1 mm inclusive. By setting the diameter within the range, aggregation of the refractory firing powder and adhesion thereof to the fired body can be effectively suppressed.

It is preferred that the refractory firing powder has a degree of circularity at 0.5 or above, which is defined by the following formula found by a flow particle image analysis.

Degree of circularity = (a circumferential length of a circle having an identical area to a projected area of a particle) / (a circumferential length of a measured particle)

In a case where the degree of circularity of the powder is 0.5 or more, since the powder has rounded contours, biting the powder into the firing object can be suppressed. In this way, an adhesive force of the fired body and the powder is reduced thereby it is possible to brush the powder off easily.

It is preferred that a thickness of the layer formed by the refractory firing powder when firing is not less than 1 mm. In the case where the thickness of the layer is not less than 1 mm, individual particles of the powder can move freely. Therefore, the powder can follow freely in response to shrinkage of the firing object during firing, and a relaxation effect of a thermal expansion difference between the powder and the firing object is enhanced. As a result, it is possible to eliminate occurrence of cracks on the fired body.

It is preferred that a percentage composition by weight of the silicon metal in relation to the refractory firing powder is in a range from 10% to 30%. In this case, it is possible to obtain sufficient evaporation of the silicon metal from the refractory firing powder during the firing. In this way, it is possible to suppress evaporation of the silicon metal from the firing object. As a result, it is also possible to suppress deposition of the silicon metal on a surface of the fired body, and eventually to suppress degradation of the characteristics and discoloration of the fired body.

### BRIEF DESCRIPTION OF THE DRAWINGS

Fig. 1 is a schematic sectional view of a firing furnace indicating a firing condition in a manufacturing method of a conventional ceramic structure;
Fig. 2 is a schematic transparent perspective view of the firing furnace indicating a firing condition in a manufacturing method of an embodiment of the present invention; and
Fig. 3 is a schematic sectional view of Fig. 2.

### DETAILED DESCRIPTION

A manufacturing method of a ceramic structure according to an embodiment of the present invention includes a step of forming a green body, which results from mixing and kneading materials obtained as a consequence of adding silicon metal and an organic binder to a silicon carbide powder material, a step of molding this green body into a predetermined shape, a step of prefiring the obtained formed body to remove the organic binder in the formed body, and a step of firing the formed body after prefiring. Here, at least in the firing process within the prefiring process and the firing process, the firing out is performed by placing the formed body after prefiring on a layer of refractory firing powder containing silicon metal.

In this ceramic structure, the silicon metal is melted during the firing, and has a function to moisten surfaces of silicon carbide particles and to bond the particles together, thereby forming a Si-bonded SiC structure. Therefore, according to the manufacturing method of the present invention, it is possible to manufacture a porous ceramic structure having the Si-bonded SiC structure.

Since silicon carbide has high heat resistance, silicon carbide is suitably adopted to a DPF (diesel particulate filter) which is frequently exposed to a high temperature in a heat treatment for accumulated particulates, for example. In a case where the ceramic structure to be finally obtained by this manufacturing method is a honeycomb structure for example, an average particle diameter of the silicon carbide powder material in the ceramic structure is two to four times as large as an average pore diameter of the honeycomb structure.

An appropriate amount of addition of the silicon metal to the ceramic structure varies depending on the particle diameter and particle shape of the silicon carbide powder material. However, the amount thereof is set in a range from 5% to 50% by weight relative to the aggregate amount of the silicon carbide powder material and the silicon metal, for example. In this case, an average particle diameter of the silicon metal is set at 50% or less of the average particle diameter of the silicon carbide powder material.

In order to form a honeycomb shape smoothly by extrusion molding of a green body which is made by use of the silicon carbide particles as an aggregate combined with the silicon metal, and when necessary, with a pore-forming agent or the like, one or more types of organic binders as auxiliary forming agents are additionally added by the amount of at least 2% by weight of the aggregate amount of the silicon carbide powder material and the silicon metal, for example. In other words, if the aggregate weight of the silicon carbide powder material and the silicon metal is 100, 2 or more of organic binders is added. Addition of such organic binders in excess of 30% by weight incurs excessively high porosity and insufficient strength, and is not therefore preferable.

The type of organic binder to be used is not particularly limited. However, to be more precise, it is possible to cite hydroxypropylmethylcellulose, methylcellulose, hydroxyethylcellulose, carboxymethylcellulose, polyvinyl alcohol, and the like.

Moreover, in a case where a honeycomb structure is used as a filter, it is also possible to add a pore-forming agent in order to increase porosity when blending the green body. An amount of addition of the pore-forming agent is set at 30% or less by weight in addition to the aggregate amount of the silicon carbide powder material and the silicon metal, for example.

The type of the pore-forming agent used herein is not particularly limited. However, to be more precise, it is possible to cite graphite, resin foam, foamed resin foam, wheat flour, starch, phenol resin, methyl polymethacrylate, polyethylene, polymethacrylate, polyethylene terephthalate, and the like. A single pore-forming agent or a combination of two or more kinds of pore-forming agents can be used as appropriate.

The green body resulting from mixing and kneading the above-described materials in accordance with an ordinary method is formed into a desired honeycomb shape by an extrusion molding method or the like.

Subsequently, the obtained formed body is subjected to prefiring for removing the organic binders in (degreasing) the formed body, and then to firing. Prefiring is performed at a temperature lower than the melting point of the silicon metal. To be more precise, it is possible to maintain a given temperature in a range approximately from 150°C to 700°C for a while, or to perform prefiring in a given temperature range while slowing down a rate of temperature rise to 50°C/hr or less.

In terms of an atmosphere for prefiring, it is possible to use an oxidizing atmosphere (air). However, when a large amount of organic binder is included in the formed body, the binder may burn during the prefiring and may sharply raise the temperature of the formed body. Accordingly, an inert atmosphere such as N₂ or Ar is used herein.

Prefiring and subsequent firing may be performed either in the same furnace or in different furnaces as separate processes, or may be performed in the same furnace as continuous processes. Upon firing, the silicon metal needs to be softened in order to obtain a formation for bonding the silicon carbide particles to the silicon metal. As the melting point of the silicon metal is 1410°C, firing is performed under inert atmosphere in a temperature in a range from 1400°C to 1800°C. A more optimal firing temperature is determined in accordance with a microstructure and characteristic values.

At this time, at least the firing out of the prefiring and the firing are performed by placing the formed body on a layer formed by refractory firing powder containing silicon metal.

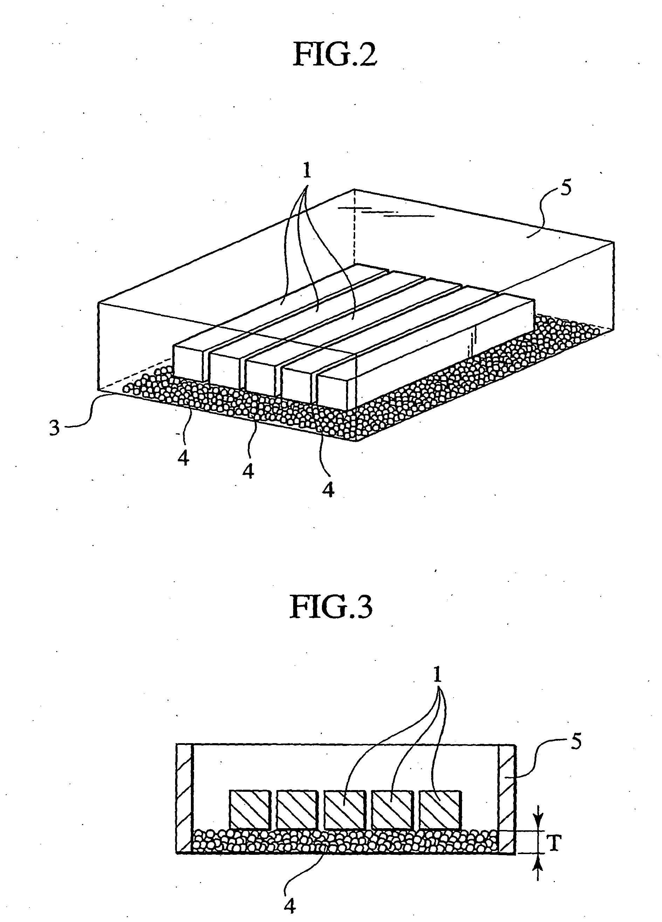

Fig. 2 and Fig. 3 are schematic views showing a state of firing of the embodiment. A refractory firing powder 4 is formed on a furnace member 3, and in which formed bodies (firing objects) 1 after the prefiring that are cut into appropriate sizes are placed on this layer. Further, they are enclosed by an enclosure 5. Firing is performed in this state while setting the atmosphere inside the furnace to the inert atmosphere other than N₂, such as Ar. When prefiring and firing are carried out as continuous processes in the same furnace, the firing is performed subsequent to the prefiring after gas replacement from the atmosphere for the prefiring to the inert atmosphere other than N₂, such as Ar.

The refractory firing powder are formed by obtaining a green body, which results from mixing and kneading materials obtained as a consequence of adding silicon metal and an organic binder to a refractory particle material, by firing the obtained green body as appropriate, and then by grinding it. As the refractory particle material, oxide such as Al₂O₃, ZrO₂ or Y₂O₃, carbide such as SiC, nitride such as Si₃N₄ or AlN, and particle such as that of mullite can be used.

Under this firing conditions, since the refractory firing powder 4 are adhered with a small adhesion area and a adhesive force is small, it is possible to brush the powder 4 off easily without incurring breakage of the fired body even the refractory firing powder 4 are adhered to an obtained fired body (a fired product of the formed bodies 1)

Here, due to a high temperature during the firing, silicon metal is evaporated from both the formed bodies 1 and from the refractory firing powder 4. An amount of evaporation in this case is more attributable to the refractory firing powder 4 which have larger surface areas than the formed bodies 1. Consequently, it is possible to suppress evaporation from the formed bodies 1.

As described above, according to this manufacturing method of the embodiment, it is possible to solve the problems unique to a ceramic structure having the Si-bonded SiC structure.

Specifically, it is easy to brush off the refractory firing powder 4 adhered to the fired body, and it is possible to suppress breakage of the fired body after firing as much as possible. Accordingly, it is possible to improve a yield. Further, since the amount of evaporation of silicon metal from the formed bodies 1 is suppressed, degradation of quality and appearance of the ceramic structure as an end product can be prevented by suppressing degradation of thermal conductivity, strength and discoloration of the fired product.

Moreover, the refractory firing powder 4 can be formed of a ground material of other fired body obtained by use of a starting material which is substantially identical to a fired body (the fired product of the formed bodies 1) obtained by the firing. The refractory firing powder 4 obtained under this condition is thus made of SiC as the refractor particle material.

In this case, the refractory firing powder 4 can be formed not only by grinding the original fired body (the fired product of the formed bodies 1) obtained by the manufacturing method of a ceramic structure but also by grinding a fired body obtained by another manufacturing method different from the manufacturing method of a ceramic structure (either by the same processes as or by different processes from those in this manufacturing method). In this way, since the refractory firing powder 4 are manufactured by use of the substantially identical starting material to the fired product of the formed bodies 1, there is an advantage that the range of applicable manufacturing methods becomes wider.

Further, preferably, diameter of the refractory firing powder 4 is in a range between 0.05 to 1 mm inclusive. It is possible to suppress aggregation of the refractory firing powder 4 and adhesion thereof to the fired body as much as possible by setting the diameters to a prescribed length. In this way, it is possible to brush off the powder 4 adhered to the fired body easily without incurring breakage of the fired body.

When the particle diameters are less than 0.05 mm, the powder are not only apt to be aggregated together but also apt to be adhered easily to the fired body. Accordingly, in addition to inconvenience for handling, there is also a risk of breakage of the fired body when brushing off the powder adhered to the firedbody. On the other hand, when the particle diameter exceeds 1 mm, the powder is apt to bite into the formed bodies 1 easily. Accordingly, there is a risk of breakage of the fired body when brushing off the refractory firing powder 4 adhered to the fired body.

Meanwhile, preferably, the refractory firing powder 4 has a degree of circularity less than 0.5, which is defined by a formula below and is obtained by a flow particle image analysis

Degree of circularity = (a circumferential length of a circle having an identical area to a projected area of a particle) / (a circumferential length of a measured particle)

The powder becomes more elongated as the degree of circularity becomes smaller and is apt to bite into the formed body. When the degree of the circularity is 0.5 or more, contours become rounded and the powder 4 cannot bite into the formed bodies 1 easily. Accordingly, since an adhesive force is small even if the powder 4 is adhered to the fired body, it is possible to brush them off easily without incurring breakage of the fired body.

On the other hand, when the degree of circularity is less than 0.5, the powder 4 have sharp shapes and is apt to bite into the formed bodies 1. Accordingly, there is a risk of breakage of the fired body when peeling off the powder adhered to the fired body.

Further, preferably, the layer formed of the refractory firing powder 4 is configured to have a thickness T (see Fig. 3) not less than 1 mm.

Under this condition, individual particles of the refractory firing powder 4 can move freely. Therefore, the powder can follow freely in response to shrinkage of the formed bodies 1 during the firing, and a relaxing effect of a thermal expansion difference between the powder and the formed bodies 1 is enhanced. In this way, it is possible to eliminate occurrence of cracks on the fired body.

When the thickness T of the layer of the refractory firing powder 4 is less than 1 mm, it is difficult for the individual particles of the powder to move freely, and the relaxation effect of the thermal expansion difference between the powder and the formed bodies 1 is reduced. Accordingly, there is a risk of incurring cracks on the fired body.

Further, preferably, a percentage composition by weight of the silicon metal of the refractory firing powder 4 is in a range from 10% to 30%. In this case, it is possible to obtain sufficient evaporation of the silicon metal from the refractory firing powder during the firing. In this way, it is possible to suppress evaporation of the silicon metal from the formed body. As a result, it is also possible to suppress deposition of the silicon metal on a surface of the fired body and eventually to suppress discoloration of the fired body.

When the percentage composition by weight of the silicon metal is less than 10%, the amount of evaporation of the silicon metal from the powder is insufficient. Accordingly, the amount of evaporation of the silicon metal from the formed bodies 1 is increased, thereby incurring degradation of thermal conductivity and strength as well as discoloration of the fired product. On the other hand, when the percentage composition by weight exceeds 30%, an adhesive tendency of the powder to the formed bodies 1 is increased and the adhesive force to the fired body is increased. Accordingly, there is a risk of breakage of the fired body when brushing off the powder adhered to the fired body.

### Examples

Now, the present invention will be described further in detail based on examples. However, the present invention shall not be limited to these examples.

Incidentally, respective examples and reference examples use the following manufacturing conditions except the firing process. Specifically, SiC material powder having average particle diameter of 50 µm and metal Si powder having average particle diameter of 5 µm are combined by 8:2. Then, 6 parts by weight of methylcellulose, 2.5 parts by weight of surfactant and 24 parts by weight of water are added to 100 parts by weight of the powder, and a green body for forming is made by mixing and kneading. This green body is formed to a honeycomb shape having 45 mm of contours, 120 mm of length, 120 mm of bulkhead, 0.43 mm thickness of the bulkhead and 100 cells/square inch (16 cells/cm²) of cell density using a extrusion molding machine. Subsequently, the obtained formed body is used as firing object and prefiring and firing are performed with the conditions described below. Incidentally, the prefiring is performed for 5 hours with the condition of 400°C in an air atmosphere, and the firing is performed for 2 hours with the condition of 1450°C in an Ar atmosphere.

Further, as refractory firing powder used in the firing process, a grinded fired body is used. Specifically, the fired body is obtained by making the combined SiC material powder and the metal Si powder under the similar manufacturing conditions for the ceramic structure described above.

### <Examples 1 and 2>

The refractory firing powder used had a degree of circularity = 0.5 to 1.00; the percentage composition by weight of the metal Si = 10% The refractory firing powder is classified by the particle diameters less than 0.01 mm (Reference Example 1), 0.01 to 0.05mm (Reference Example 2), 0.05 to 0.10mm (Example 1), 0.10 to 1.00 mm (Example 2), 1.00 to 2.00 mm (Reference Example 3), and more than 2.00 mm (Reference Example 4). In addition, the supporting layers were formed by laying the powder of the respective particle diameter groups with the layer thickness = 1.0 mm on the furnace member. Thereafter, the firing objects were placed on the supporting layers and prefiring and firing were performed continuously under the same conditions, and the ceramic structures having the Si-bonded SiC structure were thereby manufactured.

With respect to the obtained ceramic structures, occurrence of cracks, breakage when peeling off the refractory firing powder, and discoloration were observed. The results were shown in Table 1.

**TABLE 1**

| | Particle diameters | Incidence of cracks | Incidence of breakage | Incidence of discoloration |
|---|---|---|---|---|
| Reference Example 1 | less than 0.01 mm | 0% | 100% | 0% |
| Reference Example 2 | 0.01 mm to 0.05 mm | 0% | 70% | 0% |
| Example 1 | 0.05 mm to 0.10 mm | 0% | 0% | 0% |
| Example 2 | 0.10 mm to 1.00 mm | 0% | 0% | 0% |
| Reference Example 3 | 1.00 mm to 2.00 mm | 0% | 50% | 0% |
| Reference Example 4 | More than 2.00 mm | 0% | 100% | 0% |

As it is apparent from Table 1, those in Examples 1 and 2 showed 0% for all the incidences of cracks, breakage, and discoloration. Accordingly, suppression of occurrence of all the cited troubles was observed.

On the other hand, those in Reference Examples 1 to 4 showed 0% for the incidences of cracks and discoloration, but showed high incidences of breakage which were 50% or above. In particular, breakage was observed in the ceramic structures after firing, with respect to all samples of Reference Examples 1 and 4. This is because the powder are not only apt to be aggregated together but also apt to be adhered easily to the fired body when the particle diameters are less than 0. 05 mm. Accordingly, in addition to inconvenience for handling, there is also a risk of breakage of the fired body when brushing off the powder adhered to the fired body. On the other hand, when the particle diameters exceed 1 mm, the powder tend to bite into the firing obj ect easily. Accordingly, it is difficult to brush the powder off the fired body.

Therefore, it is understood that it is preferable to form the refractory firing powder as the powder having the particle diameters in the range from 0.05 to 1 mm. Incidentally, as shown in Fig. 1, in comparison with a conventional example, in which firing is performed by placing a formed body on ceramic formed body plates, even Reference Examples 1 and 4, adhesive force of the sintered body and the refractory firing powder is relatively small, thereby breakage incurred when peeling both off is small.

### <Example 3>

The refractory firing powder used was: the particle diameters = 0.05 to 1. 00 mm and the metal Si percentage composition by weight = 10%. The refractory firing powder is classified by the degree of circularity less than 0.3 (Reference Example 5), 0.3 to 0.5 (Reference Example 6), and 0.5 to 1.0 ( Example 3). In addition, the supporting layers were formed by laying the powder of the respective groups classified by degree of circularity with the layer thickness = 1.0 mm on the furnace member. Thereafter, the firing objects were placed on the supporting layers and prefiring and firing were performed continuously under the same conditions, and the ceramic structures having the Si-bonded SiC structure were thereby manufactured.

With respect to the obtained ceramic structures, occurrence of cracks, breakage when peeling off the refractory firing powder, and discoloration were observed. The results were shown in Table 2.

**TABLE 2**

| | Degree of circularity | Incidence of cracks | Incidence of breakage | Incidence of discoloration |
|---|---|---|---|---|
| Reference Example 5 | less than 0.3 | 0% | 100% | 0% |
| Reference Example 6 | 0.3 to 0.5 | 0% | 70% | 0% |
| Example 3 | 0.5 to 1.0 | 0% | 0% | 0% |

As it is apparent from Table 2, the one in Example 3 showed 0% for all the incidences of cracks, breakage, and discoloration. Accordingly, suppression of occurrence of all the cited troubles was observed.

On the other hand, those in Reference Examples 5 and 6 showed 0% for the incidences of cracks and discoloration, but showed high incidences of breakage which were 70% or above. In particular, breakage was observed in the ceramic structures after firing with respect to all samples of Reference Example 5. This is because the powder has sharp contours when the degree of circularity is less than 0.5, and are able to bite into the firing object easily. Accordingly, it is difficult to brush the powder off the fired body.

Therefore, it is understood that it is preferable to form the refractory firing powder as the powder having the degree of circularity not less than 0.5.

Incidentally, as shown in Fig. 1, in comparison with a conventional example, in which firing is performed by placing a formed body on ceramic formed body plates, adhesive force of the sintered body and the refractory firing powder is relatively small in Reference Examples 5 and 6, thereby breakage incurred when peeling both off is suppressed.

### <Examples 4 and 5>

The refractory firing powder used was: the degree of circularity = 0.5 to 1. 0; the particle diameters = 0. 050 to 1. 000 mm; and the percentage composition by weight of metal Si = 10%. Supporting layers were formed of these powder so that the respective layer thickness thereof provided on the furnacemember have 0.5 mm (Reference Example 7), 0.8 mm (Reference Example 8), 1.0 mm (Example 4), and 2. 0 mm (Example 5). Subsequently, the firing objects were placed on the respective supporting layers and prefiring and firing were performed continuously under the same conditions, and the ceramic structures having the Si-bonded SiC structure were thereby manufactured.

With respect to the obtained ceramic structures, occurrence of cracks, breakage when peeling off the refractory firing powder, and discoloration were observed. The results were shown in Table 3.

**TABLE 3**

| | Thickness of supporting layer | Incidence of cracks | Incidence of breakage | Incidence of discoloration |
|---|---|---|---|---|
| Reference Example 7 | 0.5 mm | 100% | 0% | 0% |
| Reference Example 8 | 0.8 mm | 50% | 0% | 0% |
| Example 4 | 1.0 mm | 0% | 0% | 0% |
| Example 5 | 2.0 mm | 0% | 0% | 0% |

As it is apparent from Table 3, those in Examples 4 and 5 showed 0% for all the incidences of cracks, breakage, and discoloration. Accordingly, suppression of occurrence of all the cited troubles was observed.

On the other hand, those in Reference Examples 7 and 8 showed 0% for the incidences of breakage and discoloration, but showed high incidences of cracks which were not less than 50%. In particular, cracks were observed in the ceramic structures after firing, with respect to all samples of Reference Example 7. This is because it is difficult for the individual particles of the powder to move freely when the thickness of the supporting layer is less than 1 mm, and the relaxation effect of the thermal expansion difference between the powder and the firing object is reduced.

Therefore, it is understood that it is preferable to set the thickness of the supporting layer at 1 mm or above at the time of firing.

Incidentally, as shown in Fig. 1, in comparison with a conventional example, in which firing is performed by placing a formed body on ceramic formed body plates, magnitude of the cracks of the sintered body in Reference Examples 7 and 8 is decreased.

### <Examples 6 and 7>

The refractory firing powder used was: the degree of circularity = 0.5 to 1.0; and the particle diameters = 0.050 to 1.000 mm. The refractory firing powder is classified by the percentage compositions by weight of the metal Si at 0% (Reference Example 9), 5% (Reference Example 10), 10% (Example 6), 30% (Example 7), 40% (Reference Example 11), and 60% (Reference Example 12). In addition, the supporting layers were formed by laying the powder of the respective groups classified by percentage composition by weight of the metal Si with the layer thickness = 1.0 mm on the furnace member. Thereafter, the firing objects were placed on the supporting layers and prefiring and firing were performed continuously under the same conditions, and the ceramic structures were thereby manufactured. Here, the materials other than the metal Si used therein were non-reactive in the course of the firing.

With respect to the obtained ceramic structures, occurrence of cracks, breakage when peeling off the refractory firing powder, and discoloration were observed. The results were shown in Table 4.

**TABLE 4**

| | Percentage composition by weight of Metal Si | Incidence of cracks | Incidence of breakage | Incidence of discoloration |
|---|---|---|---|---|
| Reference Example 9 | 0% | 0% | 0% | 100% |
| Reference Example 10 | 5% | 0% | 0% | 60% |
| Example 6 | 10% | 0% | 0% | 0% |
| Example 7 | 30% | 0% | 0% | 0% |
| Reference Example 11 | 40% | 0% | 80% | 0% |
| Reference Example 12 | 60% | 0% | 100% | 0% |

As it is apparent from Table 4, those in Examples 6 and 7 showed 0% for all the incidences of cracks, breakage, and discoloration. Accordingly, suppression of occurrence of all the cited troubles was observed.

On the other hand, those in Reference Examples 9 to 12 showed 0% for the incidences of cracks. However, in Reference Examples 9 and 10, the incidences of breakage were 0% but high incidences of 60% or above were observed in terms of discoloration. Meanwhile, in Reference Examples 11 and 12, the incidences of discoloration were 0% but high incidences of 80% or above were observed in terms of breakage. In particular, discoloration was observed in the ceramic structures after firing of all samples of Reference Example 9 (the percentage composition by weight of metal Si : 0%), and breakage was observed in the ceramic structures after firing of all samples of Reference Example 12. This is because the silicon metal atmosphere is insufficient only by use of the powder when the percentage composition by weight of the silicon metal is less than 10%. Accordingly, the amount of evaporation of the silicon metal from the firing object is increased and the silicon metal is deposited on the surface. On the other hand, the adhesive tendency of the powder to the firing object is increased and the adhesive force to the fired body is increased when the percentage composition by weight exceeds 30%. Accordingly, it is difficult to brush the powder off the fired body.

Therefore, it is understood that it is preferable to form the refractory firing powder of the powder having the percentage composition by weight of the silicon metal in the range from 10% to 30%.

Incidentally, as shown in Fig. 1, in comparison with a conventional example, in which firing is performed by placing a formed body on ceramic formed body plates, the degree of discoloration of the sintered body obtained in Reference Example 10 is small was small, and the breakage of the sintered body obtained in Reference Example 11 and 12 became small.

As described above, according to the manufacturing method of the ceramic structure of the present invention, it is easy to brush off the refractory firing powder adhered to the fired body and it is possible to suppress breakage of the fired product after firing as much as possible. Accordingly, it is possible to improve a yield. Further, since the amount of evaporation of the silicon metal from the firing object is suppressed, degradation of quality and appearance of the ceramic structure as an end product is suppressed by suppressing degradation of thermal conductivity and strength as well as discoloration of the fired product as much as possible.

Further, the refractory firing powder can be formed not only by grinding the original fired body obtained by the manufacturing method of a ceramic structure but also by grinding a fired body obtained by a manufacturing method different from the manufacturing method of a ceramic structure.

Moreover, when diameters of the refractory firing powder are in a range between 0.05 to 1 mm inclusive, it is possible to suppress aggregation of the refractory firing powders and adhesion thereof to the fired body. In this way, it is possible to brush off the powder particles adhered to the fired body easily without incurring breakage of the fired body. Accordingly, lowering of quality and appearance of the ceramic structure as an end product can be effectively prevented.

Meanwhile, when the degree of the circularity is 0.5 or more, contours become rounded and the powder cannot bite into the firing object easily. Therefore, since an adhesive force is small even if the powder is adhered to the fired body, it is possible to brush the powder off easily without incurring breakage of the fired body. Accordingly, lowering of quality and appearance of the ceramic structure as an end product can be more surely prevented.

Further, when the thickness of the layer formed by the refractory firing powder is not less than 1 mm, individual particles of the refractory firing powder can move freely. Therefore, the powder can follow freely in response to shrinkage of the firing object in the course of firing, and a relaxing effect of a thermal expansion difference between the powder and the firing object is enhanced, thereby occurrence of cracks on the fired body can be effectively prevented. Lowering of quality and appearance of the ceramic structure as an end product can be effectively prevented.

Moreover, when the percentage composition by weight of the silicon metal of the refractory firing powder is in a range from 10% to 30%, it is possible to obtain sufficient evaporation of the silicon metal from the refractory firing powder in the course of firing while suppressing adhesion of the refractory firing powder and the sintered body. Accordingly, it is possible to suppress evaporation of the silicon metal from the formed body and lowering of quality and appearance of the ceramic structure as an end product can be effectively prevented.

## Claims

1. A manufacturing method of a ceramic structure, comprising the steps of:
preparing a green body, which results from mixing and kneading materials obtained by adding silicon metal and an organic binder to a silicon carbide powder material;
forming a body by molding said green body;
prefiring the formed body; and
firing the formed body after prefiring when the formed body after prefiring is placed on a layer formed by a refractory firing powder containing silicon metal.

2. The manufacturing method of a ceramic structure according to claim 1, wherein the refractory firing powder is formed of a ground material of another fired body obtained by use of a starting material which is substantially identical to the fired body obtained by the firing.

3. The manufacturing method of a ceramic structure according to claims 1 or 2, wherein the particle diameter of the refractory firing powder is in a range between 0.05 and 1 mm inclusive.

4. The manufacturing method of a ceramic structure according to either one of claims 1 to 3, wherein the refractory firing powder has a degree of circularity not less than 0.5, the degree of circularity being defined by a formula in a flow particle image analysis, which is:
Degree of circularity = (a circumferential length of a circle having an identical area to a projected area of a particle) / (a circumferential length of a measured particle).

5. The manufacturing method for a ceramic structure according to either one of claims 1 to 4, wherein the layer formed by the refractory firing powder has a thickness not less than 1 mm.

6. The manufacturing method of a ceramic structure according to either one of claims 1 to 5, wherein the percentage composition by weight of the silicon metal of the refractory firing powder is in a range from 10% to 30%.

## Patentansprüche

1. Verfahren zur Herstellung einer Keramikstruktur, das folgende Schritte umfasst:
Herstellung eines Grünlings, der das Ergebnis des Mischens und Knetens von Materialien ist, die durch das Hinzufügen von Siliciummetall und einem organischen Bindemittel zu einem pulverförmigen Siliciumcarbidmaterial erhalten werden;
Ausbilden eines Körpers durch das Formen des Grünlings;
Vorbrennen des Formkörpers; und
Brennen des Formkörpers nach dem Vorbrennen, wobei der Formkörper nach dem Vorbrennen auf einer Schicht platziert wird, die aus einem feuerfesten siliciummetallhältigen Brennpulver ausgebildet ist.

2. Verfahren zur Herstellung einer Keramikstruktur nach Anspruch 1, worin das feuerfeste Brennpulver aus einem gemahlenen Material eines anderen gebrannten Körpers ausgebildet ist, der unter Einsatz eines Ausgangsmaterials erhalten wird, das mit dem durch das Brennen erhaltenen gebrannten Körper im Wesentlichen übereinstimmt.

3. Verfahren zur Herstellung einer Keramikstruktur nach Anspruch 1 oder 2, worin der Teilchendurchmesser des feuerfesten Brennpulvers in einem Bereich zwischen 0,05 und 1 mm (Grenzen eingeschlossen) liegt.

4. Verfahren zur Herstellung einer Keramikstruktur nach einem der Ansprüche 1 bis 3, worin das feuerfeste Brennpulver ein Ausmaß an Kreisförmigkeit von nicht weniger als 0,5 aufweist, wobei das Kreisförmigkeitsausmaß durch folgende Formel in einer Teilchenstrombildanalyse definiert ist: Kreisförmigkeitsausmaß = (Umfangslänge eines Kreises, der dieselbe Fläche wie eine Projektionsfläche eines Teilchens aufweist) / (Umfangslänge eines gemessenen Teilchens).

5. Verfahren zur Herstellung einer Keramikstruktur nach einem der Ansprüche 1 bis 4, worin die aus einem feuerfesten Brennpulver ausgebildete Schicht eine Dicke von nicht weniger als 1 mm aufweist.

6. Verfahren zur Herstellung einer Keramikstruktur nach einem der Ansprüche 1 bis 5, worin der Gewichtsprozentsatz des Siliciummetalls des feuerfesten Brennpulvers in der Zusammensetzung im Bereich von 10 bis 30 % liegt.

## Revendications

1. Procédé de fabrication d'une structure céramique, comprenant les étapes de:
préparer un corps vert, qui résulte du mélange et du malaxage de matériaux obtenu en ajoutant un métal de silicium et un liant organique à un matériau en poudre de carbure de silicium;
former un corps en moulant ledit corps vert;
précuire le corps formé; et
cuire le corps formé après la précuisson lorsque le corps formé après la précuisson est placé sur une couche formée par une poudre de cuisson réfractaire contenant le métal de silicium.

2. Procédé de fabrication d'une structure céramique selon la revendication 1, dans lequel la poudre de cuisson réfractaire est formée à partir d'un matériau meulé d'un autre corps cuit obtenu en utilisant un matériau de départ qui est sensiblement identique au corps cuit obtenu par la cuisson.

3. Procédé de fabrication d'une structure céramique selon les revendications 1 ou 2, dans lequel le diamètre des particules de la poudre de cuisson réfractaire est dans une plage entre 0,05 et 1 mm inclus.

4. Procédé de fabrication d'une structure céramique selon l'une quelconque des revendications 1 à 3, dans lequel la poudre de cuisson réfractaire possède un degré de circularité non inférieur à 0,5, le degré de circularité étant défini par une formule dans une analyse d'image de particules d'écoulement, qui est:
degré de circularité = (une longueur circonférentielle d'un cercle ayant une zone identique à une zone projetée d'une particule)/(une longueur circonférentielle d'une particule mesurée).

5. Procédé de fabrication d'une structure céramique selon l'une quelconque des revendications 1 à 4, dans lequel la couche formée par la poudre de cuisson réfractaire a une épaisseur non inférieure à 1 mm.

6. Procédé de fabrication d'une structure céramique selon l'une quelconque des revendications 1 à 5, dans lequel la composition en pourcentage en poids du métal de silicium de la poudre de cuisson réfractaire est dans une plage de 10% à 30%.
